# EUROPÄISCHE PATENTSCHRIFT

(11) **EP 1 722 990 B1**
(45) Veröffentlichungstag und Bekanntmachung des Hinweises auf die Patenterteilung: **17.10.2007**
(21) Anmeldenummer: 05732645.6
(22) Anmeldetag: 01.03.2005
(51) Int. Cl.: B60G 7/00

(54) **FÜHRUNGSLENKER FÜR DIE RADAUFHÄNGUNG EINES KRAFTFAHRZEUGES**
RADIUS ARM FOR THE WHEEL SUSPENSION OF A MOTOR VEHICLE
BRAS DE GUIDAGE POUR LA SUSPENSION D'UN VEHICULE AUTOMOBILE

(30) Priorität: 09.03.2004 DE 102004011766
(43) Veröffentlichungstag der Anmeldung: 22.11.2006
(73) Patentinhaber: ZF FRIEDRICHSHAFEN AG, 88038 Friedrichshafen (DE)
(72) Erfinder: NACHBAR, Frank, 49448 Lemförde (DE)
(86) Internationale Anmeldenummer: PCT/DE2005/000353
(87) Internationale Veröffentlichungsnummer: WO 2005/087520

(56) Entgegenhaltungen:
- WO-A-02/074562
- US-B1- 6 688 586
- PATENT ABSTRACTS OF JAPAN Bd. 2003, Nr. 12, 5. Dezember 2003 (2003-12-05) & JP 2003 267017 A (HORIKIRI:KK), 25. September 2003 (2003-09-25)
- PATENT ABSTRACTS OF JAPAN Bd. 011, Nr. 076 (M-569), 7. März 1987 (1987-03-07) & JP 61 233214 A (MITSUBISHI STEEL MFG CO LTD), 17. Oktober 1986 (1986-10-17)

## Beschreibung

Die Erfindung betrifft einen Führungslenker für die Radaufhängung eines Kraftfahrzeuges mit einem aus mindestens einem Metallblechteil geformten Lenkerkörper und mindestens einem am Lenkerkörper befindlichen Anlenkpunkt für die Verbindung zu einem karosserieseitigen Befestigungspunkt, wobei der Anlenkpunkt als kreisförmige Aufnahmebuchse für ein elastisches Lagerelement ausgebildet ist.

Derartige gattungsgemäße Führungslenker werden auch als Querlenker bezeichnet und bestehen in der Regel aus einfachen oder doppelten miteinander verbundenen Stahlblechen, wobei die Blechkonstruktion abschnittsweise zur Erhöhung der Steifigkeit mit Sicken oder Umkantungen versehen sein kann. Die Führungslenker besitzen dabei Anlenkpunkte zur Festlegung radbezogener Bauteile sowie darüber hinaus Anlenkpunkte zur karosserieseitigen Festlegung des Führungslenkers. Diese Anlenkpunkte sind in der Regel so ausgelegt, dass in diesen Punkten eine gewisse Beweglichkeit gewährleistet ist, die durch eine elastische Lagerung, beispielsweise mittels Gummielementen, realisiert wird. Diese Gummielemente sind am Führungslenker in kreisförmigen Aufnahmebuchsen aufgenommen, die im Stand der Technik auf unterschiedliche Art und Weise mit dem eigentlichen Lenkerkörper verbunden sind.

Bekannt sind beispielsweise Hilfsgehäuse, die als separate Bauteile am Führungslenker angeschraubt oder angenietet werden. Andere Bauweisen sehen vor, zusätzliche Blechschalen zur Aufnahme der Gummielemente oder entsprechende Aufnahmebuchsen mit den Lenkergehäusen beispielsweise durch Schweißvorgänge zu verbinden.

Alle geschilderten konstruktiven Maßnahmen haben den Nachteil, dass die mit dem Lenkergehäuse zu verbindenden Aufnahmebuchsen bzw. Lagerbauteile in separaten Herstellungsschritten gefertigt und dann mit dem eigentlichen Lenkergehäuse zu verbinden sind. Dies bedeutet eine erhöhte Anzahl von Herstell- bzw. Montageschritten und damit verbunden erhöhte Produktionskosten, wobei darüber hinaus zusätzliche Einzelteile in Bezug auf Lagerhaltungskosten negative Auswirkungen haben.

Aus dem Stand der Technik sind darüber hinaus Möglichkeiten bekannt geworden, zweischalige Lenkerkörper, welche aus miteinander verschweißten Ober- und Unterteilen bestehen, mit zweigeteilten Aufnahmebuchsen zu versehen, wie dies beispielsweise in der Patentanmeldung WO 02/074562 A2 offenbart ist. Der Nachteil der dort dargestellten konstruktiven Gestaltung besteht in einer erhöhten Ungenauigkeit der Aufnahmebuchse in Folge der in der Lageebene befindlichen Teilung.

Ausgehend von dem bestehenden Stand der Technik ist es daher Aufgabe der Erfindung, einen Führungslenker für die Radaufhängung eines Kraftfahrzeuges bezüglich seiner Anlenkpunkte insbesondere zur Karosserie so zu gestalten, dass eine vereinfachte, kostengünstige Herstellung gewährleistet sowie der Führungslenker im Hinblick auf sein Gewicht optimiert ist.

Diese Aufgabe wird erfindungsgemäß dadurch gelöst, dass die Wandung der Aufnahmebuchse einstückig mit dem Lenkerkörper ausgeformt ist und aus einem ringförmig ausgebildeten Lagerbereich sowie einer am Lenkerkörper festgelegten Befestigungslasche besteht.

Durch diese konstruktive Gestaltung entfallen die bislang für die Herstellung der gattungsgemäßen Führungslenker notwendigen Zusatzbauelemente der Anlenkpunkte, darüber hinaus wird die Herstellung des Lenkerkörpers dadurch vereinfacht, dass die Gestaltung der notwendigen Aufnahmebuchse für das elastische Lagerelement gleichzeitig mit der Umformung des für den Lenkerkörper verwendeten Blechbauteiles durchgeführt werden kann.

Spezielle Ausgestaltungen des Gegenstandes der Erfindung ergeben sich in Zusammenschau mit der technischen Lehre des Anspruches 1 aus den Merkmalen der Unteransprüche.

Für die Festlegung der Befestigungslasche am Lenkerkörper hat es sich als vorteilhaft erwiesen, wenn diese durch eine Schweißung, Klebung, Nietung, Schraubung, Clinchung oder Toxung am Lenkerkörper festgelegt ist. Die genannten Befestigungsarten stellen in Bezug auf die notwendigen Herstellungsabläufe eine kostengünstige Bearbeitungsvariante dar.

Es hat sich darüber hinaus als zweckmäßig erwiesen, den Lagerbereich und die Befestigungslasche so zu gestalten, dass diese im Wesentlichen gleiche Breitenabmaße aufweisen.

Im Folgenden werden zwei Ausführungsbeispiele des Gegenstandes der Erfindung anhand der beigefügten Zeichnungen näher erläutert. Dabei zeigt:
- Figur 1: eine Teilansicht eines erfindungsgemäßen Führungslenkers im Bereich des Anlenkpunktes bei einer einschaligen Ausgestaltung des Lenkerkörpers und
- Figur 2: eine Teilansicht eines weiteren erfindungsgemäßen Führungslenkers im Bereich des Anlenkpunktes bei einer zweischaligen Lenkerkörperausgestaltung.

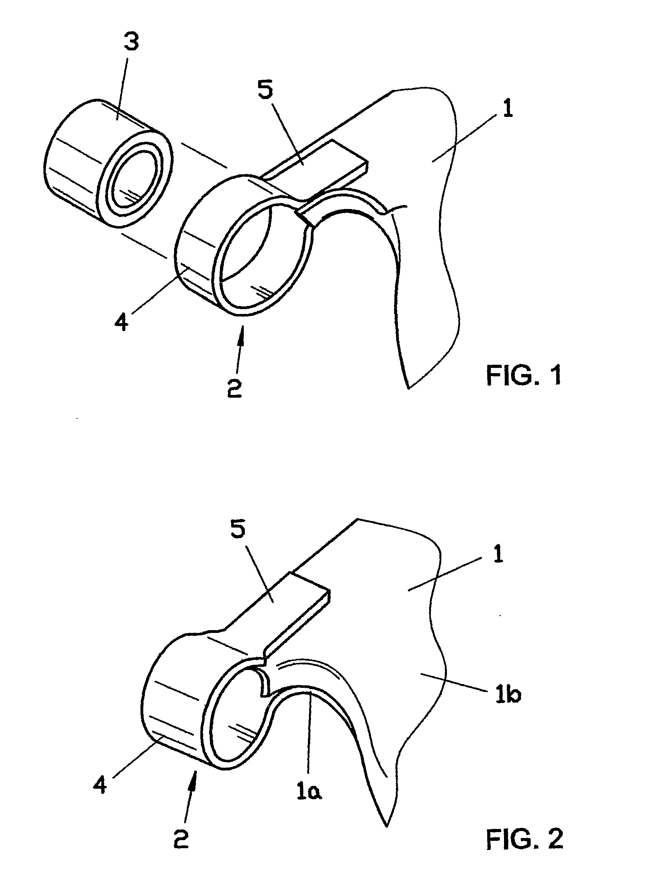

Der in der Figur 1 dargestellte Lenkerkörper 1 eines erfindungsgemäßen Führungslenkers besteht aus einem Stahlblechbauteil, an dem in einem Eckbereich eine in ihrer Gesamtheit mit 2 gekennzeichnete Aufnahmebuchse angeordnet ist. In die Aufnahmebuchse wird ein schematisch dargestelltes Lagerelement 3 in Form eines Gummiringes eingesetzt. Die Aufnahmebuchse 2 besteht, wie dies aus der Figur 1 ersichtlich ist, aus einem ringsförmig ausgebildeten Lagerbereich 4 sowie einer Befestigungslasche 5. Der Lagerbereich 4 und die Befestigungslasche 5 weisen im dargestellten Ausführungsbeispiel gleiche Breite auf und sind im unverformten Rohzustand des Lenkerkörpers 1 als Bestandteil von Letzterem laschenförmig ausgeformt. Im Rahmen des Umformvorganges zur Herstellung der endgültigen Lenkerkörperkontur wird der Lagerbereich 4 ringförmige ausgebildet sowie die Befestigungslasche 5 so angeformt, dass diese auf der Oberseite des Lenkerkörpers 1 zur Anlage kommt. In einem abschließenden Arbeitsgang wird die Befestigungslasche 5 dann mittels eines Schweiß- oder Klebevorganges mit dem Lenkerkörper unlösbar verbunden. Der Schweißvorgang kann dabei mittels einer Punktschweißung erfolgen. Alternativ dazu ist eine Kantenumschweißung der Befestigungslasche denkbar.

Das in der Figur 2 dargestellte Ausführungsbeispiel unterscheidet sich von demjenigen der Figur 1 dadurch, dass hier der Lenkerkörper 1 aus einem Unterblech 1a und einem Oberblech 1b aufgebaut ist. Oberblech 1b und Unterblech 1a sind miteinander verschweißt. Die Aufnahmebuchse 2 ist im unbearbeiteten Zustand des Lenkerkörpers 1 als Lasche des Unterbleches 1a ausgestaltet und wird im Rahmen des Herstellvorganges so umgeformt, dass sich zum Einen der ringförmig ausgebildete Lagerbereich zur Aufnahme eins elastischen Lagerelementes sowie ergänzend die Befestigungslasche 5 ergibt. Die Befestigungslasche 5 kommt in der dargestellten Ausgestaltung auf der Oberseite des Oberbleches 1b zur Anlage und wird hier analog zur Darstellung der Figur 1 durch Klebung, Schweißung oder Nietung am Oberblech 1b befestigt.

### Bezugszeichenliste

- 1: Lenkerkörper
- 1a: Unterblech
- 1b: Oberblech
- 2: Aufnahmebuchse
- 3: Lagerelement
- 4: Lagerbereich
- 5: Befestigungslasche

## Patentansprüche

1. Führungslenker für die Radaufhängung eines Kraftfahrzeuges mit einem aus mindestens einem Metallblechteil geformten Lenkerkörper und mit mindestens einem Anlenkpunkt für die Verbindung zu einem karosserieseitigen Befestigungspunkt, wobei der Anlenkpunkt als kreisförmige Aufnahmebuchse für ein elastisches Lagerelement ausgebildet ist,
**dadurch gekennzeichnet dass** die Wandung der Aufnahmebuchse (2) einstückig mit dem Lenkerkörper (1) ausgeformt ist und aus einem ringförmig ausgebildeten Lagerbereich (4) sowie einer am Lenkerkörper (1) festgelegten Befestigungslasche (5) besteht.

2. Führungslenker nach Anspruch 1,
**dadurch gekennzeichnet, dass** die Befestigungslasche (5) am Lenkerkörper (1) durch Schweißung festgelegt ist.

3. Führungslenker nach Anspruch 1,
**dadurch gekennzeichnet, dass** die Befestigungslasche (5) am Lenkerkörper (1) durch Klebung festgelegt ist.

4. Führungslenker nach Anspruch 1,
**dadurch gekennzeichnet, dass** die Befestigungslasche (5) am Lenkerkörper (1) durch Nietung festgelegt ist.

5. Führungslenker nach Anspruch 1,
**dadurch gekennzeichnet, dass** die Befestigungslasche (5) am Lenkerkörper (1) durch Verschraubung festgelegt ist.

6. Führungslenker nach Anspruch 1,
**dadurch gekennzeichnet, dass** die Befestigungslasche (5) am Lenkerkörper (1) durch Clinchung festgelegt ist.

7. Führungslenker nach Anspruch 1,
**dadurch gekennzeichnet, dass** die Befestigungslasche (5) am Lenkerkörper (1) durch Toxung festgelegt ist.

8. Führungslenker nach einem der Ansprüche 1 bis 7,
**dadurch gekennzeichnet, dass** der Lagerbereich (4) und die Befestigungslasche (5) im Wesentlichen gleiche Breitenmaße aufweisen.

## Claims

1. Track control arm for the wheel suspension of a motor vehicle comprising a control arm body formed from at least one sheet-metal part as well as at least one coupling point for the connection to a body-side fastening point, wherein the coupling point takes the form of a circular locating bush for a resilient bearing element,
**characterized in that** the wall of the locating bush (2) is formed integrally with the control arm body (1) and comprises an annular bearing region (4) as well as a mounting strap (5) fixed to the control arm body (1).

2. Track control arm according to claim 1,
**characterized in that** the mounting strap (5) is fixed by welding to the control arm body (1).

3. Track control arm according to claim 1,
**characterized in that** the mounting strap (5) is fixed by gluing to the control arm body (1).

4. Track control arm according to claim 1,
**characterized in that** the mounting strap (5) is fixed by riveting to the control arm body (1).

5. Track control arm according to claim 1,
**characterized in that** the mounting strap (5) is fixed by screwing to the control arm body (1).

6. Track control arm according to claim 1,
**characterized in that** the mounting strap (5) is fixed by clinching to the control arm body (1).

7. Track control arm according to claim 1,
**characterized in that** the mounting strap (5) is fixed by Tox-clinching to the control arm body (1).

8. Track control arm according to one of claims 1 to 7,
**characterized in that** the bearing region (4) and the mounting strap (5) have substantially identical width dimensions.

## Revendications

1. Bras oscillant de guidage pour la suspension de roue d'un véhicule automobile avec un corps de bras oscillant formé dans au moins une pièce en tôle métallique et avec au moins un point d'articulation pour la liaison avec un point de fixation côté carrosserie, le point d'articulation étant réalisé sous la forme d'une douille de réception de forme circulaire pour un élément de palier élastique,
**caractérisé en ce que** la paroi de la douille de réception (2) est formée d'un seul tenant avec le corps de bras oscillant (1) et est constituée d'une zone de palier (4) de forme annulaire ainsi que d'une patte de fixation (5) fixée sur le corps de bras oscillant (1).

2. Bras oscillant de guidage selon la revendication 1,
**caractérisé en ce que** la patte de fixation (5) est fixée au corps de bras oscillant (1) par soudage.

3. Bras oscillant de guidage selon la revendication 1,
**caractérisé en ce que** la patte de fixation (5) est fixée au corps de bras oscillant (1) par collage.

4. Bras oscillant de guidage selon la revendication 1,
**caractérisé en ce que** la patte de fixation (5) est fixée au corps de bras oscillant (1) par rivetage.

5. Bras oscillant de guidage selon la revendication 1,
**caractérisé en ce que** la patte de fixation (5) est fixée au corps de bras oscillant (1) par vissage.

6. Bras oscillant de guidage selon la revendication 1,
**caractérisé en ce que** la patte de fixation (5) est fixée au corps de bras oscillant (1) par sertissage.

7. Bras oscillant de guidage selon la revendication 1,
**caractérisé en ce que** la patte de fixation (5) est fixée au corps de bras oscillant (1) par toxing.

8. Bras oscillant de guidage selon l'une des revendications 1 à 7,
**caractérisé en ce que** la zone de palier (4) et la patte de fixation (5) présentent sensiblement la même dimension en largeur.
